# EUROPEAN PATENT SPECIFICATION

(11) **EP 0 877 717 B1**
(45) Date of publication and mention of the grant of the patent: **15.03.2000**
(21) Application number: 97902260.5
(22) Date of filing: 29.01.1997
(51) Int. Cl.: C04B 20/00, E21B 33/13

(54) **CEMENT COMPOSITIONS INCLUDING ADDITIVES**
ZEMENTZUSAMMENSETZUNGEN MIT ZUSATZSTOFFEN
COMPOSITIONS DE CIMENT CONTENANT DES ADDITIFS

(30) Priority: 31.01.1996 FR 9601176
(43) Date of publication of application: 18.11.1998
(73) Proprietor: SOFITECH N.V., 1180 Bruxelles (BE)
(72) Inventor: BARET, Jean-François, F-75015 Paris (FR); MAROY, Pierre, F-78530 Buc (FR)
(74) Representative: Menès, Catherine
(86) International application number: EP9700397
(87) International publication number: WO9728097

(56) References cited:
- WO-A-95/27685
- GB-A- 2 179 933
- GB-A- 2 212 489
- US-A- 4 482 381
- US-A- 4 941 536
- US-A- 5 229 019
- Ullmanns Enzyklopädie der technischen Chemie, 4 Aufl., Band 21, 1949, pp.446,447

## Description

The present invention relates to cement compositions containing additives for controlling fluid loss and intended more particularly for fluids such as oil industry fluids used in drilling, cementing, or stimulation operations in oil, gas, water, or geothermal wells and the like, or fluids used in civil engineering, such as the fluids included in the composition of certain concretes, for example, in particular those used for injection purposes or more generally in pumping operations.

It is known that slurries containing a hydraulic cement lose a fraction of their water when they come into contact with permeable materials, and in particular underground formations that are clayey or of any other type of rock that is permeable to a greater or lesser extent. This "fluid loss" phenomenon has effects that are negative both on the rheological properties of the slurry, reducing its fluidity, and thus making it more difficult to pump and possibly leading to stoppage, and on gas migration given that a slurry which is sensitive to fluid loss is generally unlikely to oppose gas migration while the cement is setting, which can give rise to severe safety problems for operations performed on oil wells.

Also, fluid losses are generally not uniform; for example, they may be greater in hotter locations close to the bottom of the well or at the end of cementing. This is very harmful to the quality of operations performed.

Far from being strictly specific to cementing slurries for oil wells and the like, the problem of fluid loss is also encountered with concretes or other similar substances used in civil engineering and, for example, pumped for the purpose of being injected in shuttering, e.g. in order to make the piles of a structure.

Such fluid loss is controlled by adding a fluid loss control additive to the cement slurry. Such additives come in two broad classes: water-soluble polymers; and materials comprising finely-divided particles. A representative of this prior art is GB-A-2 212 489.

The water-soluble polymers most worthy of mention are substances derived from cellulose, such as hydroxyethyl cellulose and carboxymethyl cellulose, in particular, and synthetic polymers such as derivatives of acrylamide or alkylene-amine copolymers, or polyvinyl alcohol, in particular. In general, the mechanism implemented by water-soluble polymers relies on an increase in the viscosity of the aqueous phase of the cement slurry and a decrease in the permeability of the filter cake, i.e. the solid particles deposited on the walls of the well by the cement slurry. Although in very widespread use, water-soluble particles nevertheless suffer from various limitations: if the aqueous phase is too viscous, then mixing with cement becomes very difficult. Also, such substances usually have a delaying effect on the setting of the cement. Finally, and this is not the least of the drawbacks, substances of synthetic origin are relatively expensive and can represent as much as half the cost price of a cement composition.

It is known that certain solid materials in the form of small particles have an effect on controlling fluid loss even if such materials are not usually added to a cementing composition for this purpose. This applies to clayey minerals such as bentonite which is commonly used for lightening cement slurries.

Finally, there exists a somewhat hybrid class of filter loss control agent constituted by materials of submicron size in suspension in a liquid, e.g. latex type polymer emulsions, in particular polyvinyl acetates, styrene-butadine lattices, and colloidal materials. Lattices are synthetic materials comprising some of the most sophisticated and expensive of all additives used in this industry and as a result they are reserved for the most difficult applications, in particular preventing gas migrating through cement while the cement is setting.

The fluid loss controlling effect obtained with such solid materials is generally attributed to the pores between the grains of cement becoming plugged. However it must be recognised that the mechanism is far from being completely elucidated and probably implies various interactions between the solid particles themselves and the grains of cement. Attapulgite, a material which is used as a substitute for bentonite in environments that are very salty thus has no recognized fluid loss controlling effect. Also, the performance of materials of mineral origin are well below the performance of water-soluble polymers.

There thus remains a presently unsatisfied need for fluid loss control agents that are easily available, that provide good performance, and that are compatible with most of the densities commonly used for cementing slurries (10 ppg to 25 ppg, i.e. 1.2 g/cm³ to 3 g/cm³).

The present invention proposes a cementing composition comprising an additive as a fluid loss control agent which additive is constituted by solid particles passed through a 50 micron or smaller screen, e.g. a 20 micron screen or a 10 micron screen. The screening preferably serves to eliminate all particles having a diameter greater than 10 microns.

The concept of screening, also known as riddling, as used in the definition of the invention refers to a mechanical separation operation excluding, for example, the use of electrostatic precipitators filters for separating small particles, and excluding liquid-based methods.

More generally, the term must be understood as covering any means of classifying fine particles using a dry process, in particular by means of cyclones or by rotation, vibration, or any other equivalent means. By eliminating larger-sized particles in this way, a much narrower grain size curve is obtained characterised by quite a sharp break at the large-sized particle end, it nevertheless being emphasised that the mean size of the screened particles is much smaller than the screen mesh size. Thus, 50 micron screening serves, in fact, to eliminate the great majority of particles with a size greater than 20 microns.

Solid particles suitable for use after screening in accordance with the invention are preferably particles of mineral origin. Particularly preferred are substances based on silica, such as silica flour for example which is generally obtained by grinding fine sand, or fly ash, a residue from burning coal. In general, it is preferable to use substances in which the particles are more or less spherical.

Silica flour and fly ash are two additives that are very commonly used in cement compositions, in particular for the purpose of lightening a slurry. Fly ash has the advantage of having a pozzolanic character, i.e. in the presence of water it reacts with the calcium hydroxide of Portland cement to form compounds possessing the properties of a cement. Being of smaller density than Portland cement and of similar grain size, such substances thus replace the Portland cement in full or in part.

If particles of larger size are not eliminated, then silica flour and fly ash do not have any significant effect on controlling fluid loss. In contrast, merely be being screened, these substances become good fluid loss control agents.

Results are further improved with improved dispersion of the solid particles. A dispersing agent is therefore preferably added to cement compositions of the invention. In this context, it is possible in particular to use the dispersants commonly employed for preparing cement slurries, and also known as superplasticizers. By way of example, mention can be made of sulfonates such as polymelamine sulfonate (PMS), polynaphthalene sulfonate (PNS), lignosulfates, polystyrene sulfonates, hydroxylated polysaccharides, and certain hydroxycarbolic acids.

The invention also provides a cementing slurry comprising a hydraulic cement, in particular of the Portland type, a fluid loss control agent of the invention, a dispersing agent, and an aqueous phase. In known manner, the following can be added to this basic slurry: a cement setting retarder, or on the contrary an accelerator, a weighting agent, and other additives known in this art.

Concentrations of 2% to 5% (weight concentrations relative to the weight of cement) suffice to obtain a large reduction in fluid loss. Best results are usually obtained with concentrations of about 15%, and more generally with concentrations lying in the range 10% to 20%.

With compositions that are very well dispersed, the fluid loss control agent can be at a slightly lower concentration.

Using the filter loss control agent of the invention, which is no more than a solid mineral additive, it is already possible to obtain fluid losses of less than 100 ml. If even lower values are desired, a higher performance fluid loss control agent, in particular a water-soluble polymer, may be added to the composition, but in much smaller quantity than would be required in the absence of the loss control agent of the invention.

Other details and characteristics of the invention appear from the following description of tests performed on various example compositions including the additive, and made with reference to the accompanying drawings, in which:
- Figures 1 and 1-bis are grain size curves for fly ash, before and after 50 micron riddling, and also, by way of comparison, for various Portland cements used for cementing wells;
- Figure 2 shows grain size curves for silica flour, before and after 50 micron riddling;
- Figure 3 is a bar chart showing fluid losses at 85°C as a function of various quantities of screened or unscreened fly ash added to the composition, the percentages being given relative to the weight of cement;
- Figure 4 is a bar chart showing fluid losses at 85°C as a function of various quantities of riddled or unriddled silica flour added to the composition, the percentages being given relative to the weight of cement;
- Figure 5 applies to a 1.44 g/cm³ (i.e. 12 ppg) cement slurry and shows the effect on fluid loss of increasing the concentration of dispersing agent, for various different concentrations of 50 micron screened fly ash; and
- Figure 6 applies to a 2.04 g/cm³ (i.e. 17 ppg) cement slurry and shows the effect on fluid loss of increasing the concentration of 50 micron screened fly ash.

To illustrate the invention in non-limiting manner, tests have been performed on two types of material: fly ash (Examples 1, 3, and 4), and silica flour (Example 2).

### Example 1

Fly ash is a residue produced by burning coal, in particular in coal-burning electricity power stations. In modern installations, the burners are fed with coal that has been pulverised. The unburned fraction is vaporised in flue gas and after cooling it condenses in the form of finely-divided particles that are approximately spherical. Electrostatic precipitators in the chimneys capture all particles smaller than 200 µ.

The major component of fly ash is a glass composed mainly of silica, alumina, and iron oxides. These oxides which preferably constitute more than 70% of the composition are accompanied by lime, alkali compounds, magnesium compounds, and a small amount of unburned fuel matter. In practice, the composition of ash varies considerably as a function of the origin of the coal, the type of burner, and various other factors. The volatile compound fraction (water and carbonates) is generally in the range 8% to 12%. The density of fly ash lies in the range 2 g/cm³ to 2.7 g/cm³.

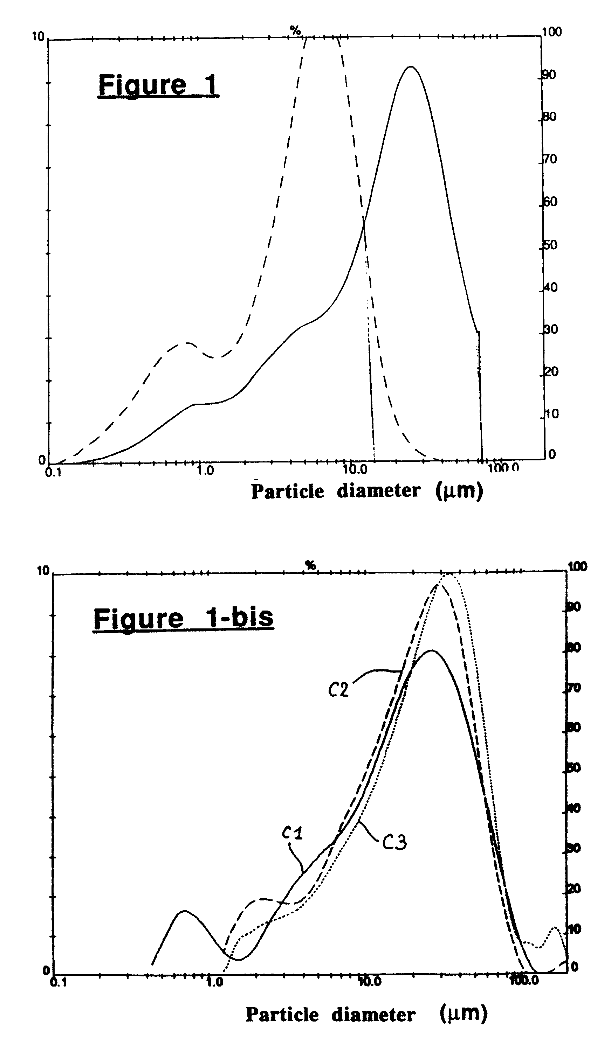

For the tests described herein, the fly ash used was class F in the ASTM classification. As can be seen by comparing Figures 1 and 1-bis, prior to riddling (Figure 1, solid line curve), the grain size distribution of such fly ash is practically identical to the distribution of class G Portland cement of the kind commonly used for cementing oil wells. The grain size curves marked in Figure 1-bis correspond to oil industry cements sold under the following names: Cemoil-1 (curve C1), Dyck G Gulf-3 (curve C2), and Black Dyckerhoff-4 (curve C3).

After passing through the 50 micron riddle, the majority of the particles had a diameter lying in the range 1 micron to 10 microns (Figure 1, dashed line curve).

The fluid losses of cements prepared using screened and unscreened fly ash were measured in compliance with API (American Petroleum) standards on the basis of elementary cementing intended solely for testing feasibility, and constituted by 600 ml of slurry made up of:
- 1046 grams (g) of class G cement;
- 240 g of water;
- ash in the percentages given (relative to the weight of cement).

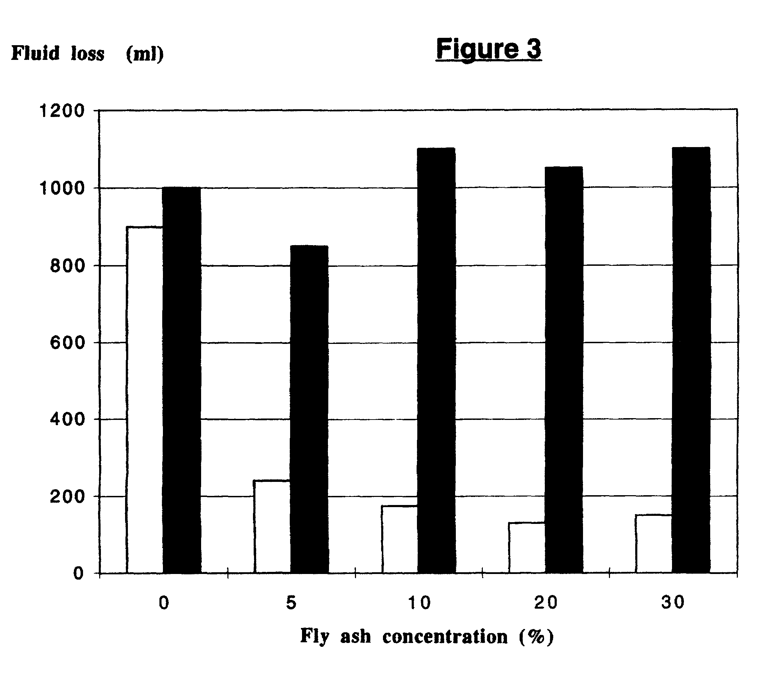

The histograms in Figure 3 (white bars corresponding to material screened in accordance with the invention, shaded bars corresponding to non-screened material) indicate clearly that non-screened fly ash as used in the prior art has no effect in controlling fluid loss regardless of the concentration of fly ash in the cement composition. In contrast, with only 5% of screened fly ash, fluid losses are already divided by four. Fluid loss control is further improved if the quantity of screened fly ash is increased, with best results appearing at concentrations of about 20%.

### Example 2

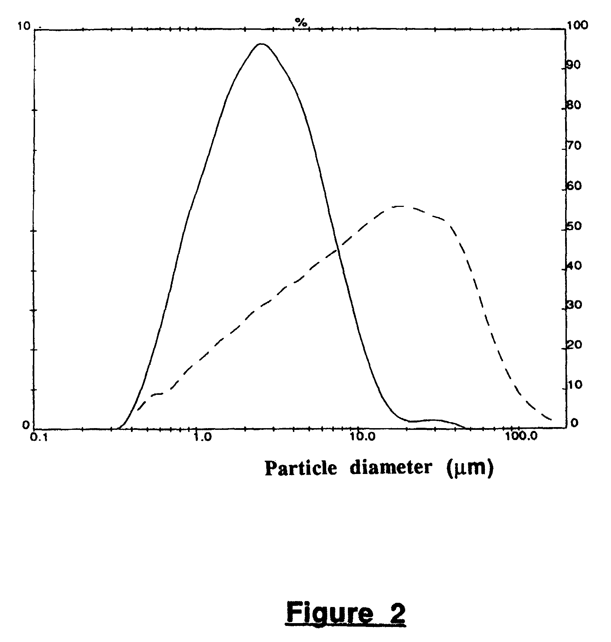

In this example, silica flour was used instead of fly ash. The silica flour was obtained by grinding fine sand (Schlumberger Dowell reference D66 for the non-screened silica flour and C600 for the screened silica flour). The grain size distribution of the substance is shown in Figure 2 where the dashed line curve is before the classification operation and the solid line curve after. It may be observed that the distribution is very similar to that obtained using fly ash.

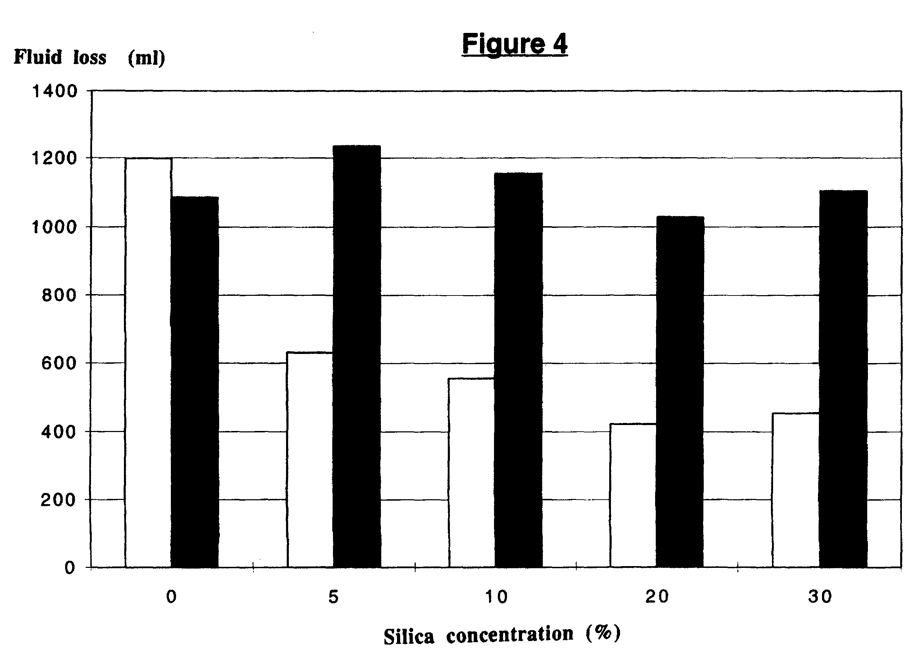

As in the preceding example, the solid particles were added to an elementary cementing base (fresh water + class G cement). It can be seen in Figure 4, in which the silica concentrations are percentages relative to the weight of cement, that the additive constituted by non-screened silica flour (shaded bars) has no effect in controlling fluid loss, whereas on the contrary a remarkable effect was obtained when using 50 micron riddled silica flour (white bars).

The looked-for effect was again obtained even at very low concentrations. The smallest fluid losses were obtained for compositions containing 20% of screened silica flour.

### Example 3

After testing feasibility, attempts were made to prepare compositions that had been optimized by adding a dispersing agent. For these tests, a dispensing agent of the polynaphthalene sulfonate type (Schlumberger Dowell reference D80) was used.

Formulations having a density of 1.44 g/cm³ were prepared by varying the concentration of the dispersing agent (concentrations given in gallons per 94 pound sack of cement; a concentration of 0.1 gal/sk or 0.1 gps thus corresponds to 0.90 litres of dispersing agent per 100 kg of cement), and by varying the concentration of screened fly ash, using the same fly ash as in Example 1 (the percentages given are weight percentages relative to the cement).

In application of the recommendations of the API standard, measurements were performed only when the test composition was indeed stable, i.e. when it did not present phase separation giving rise to free water and settling.

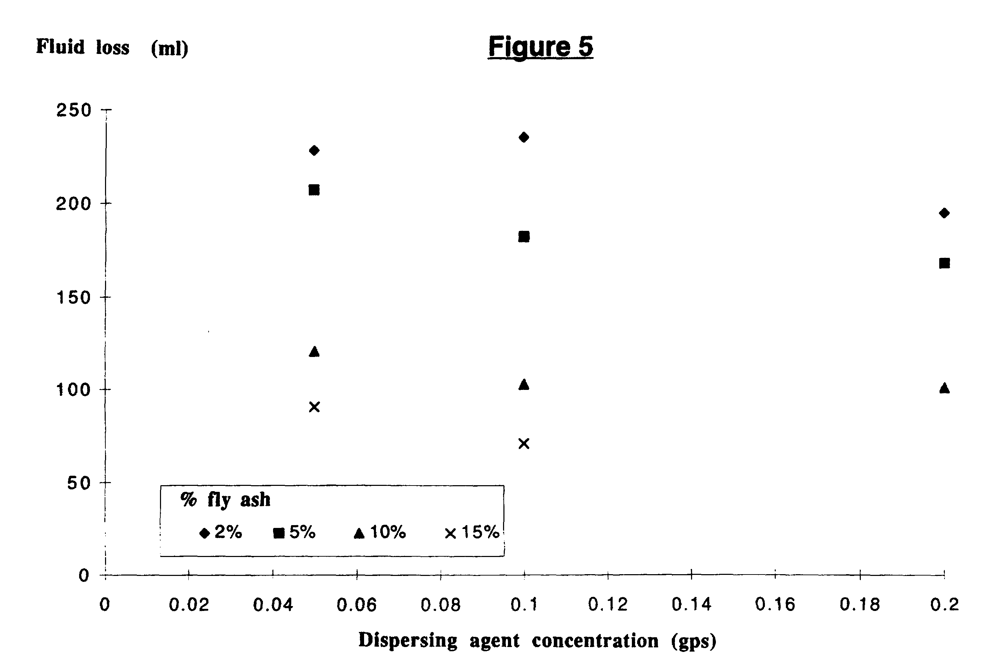

The values of fluid loss measured for the various formulations are plotted in Figure 5. It can again be seen that fluid loss control is improved with increasing concentration of screened fly ash. Also, adding a dispersing agent further significantly improves control, with an optimum at around 0.1 gal/sk. At greater concentrations, there is no further improvement in fluid loss control. Best results were obtained with 15% screened fly ash and 0.1 gal/sk of dispersing agent.

### Example 4

Tests were made to verify that cementing slurries of relatively high density (17 ppg or 2.04 g/cm³) could likewise be prepared using a fluid loss control agent of the invention. To do this, various formulations were prepared, all including a dispersing agent (0.05 gal/sk) and a cement setting retarder (0.05 gal/sk).

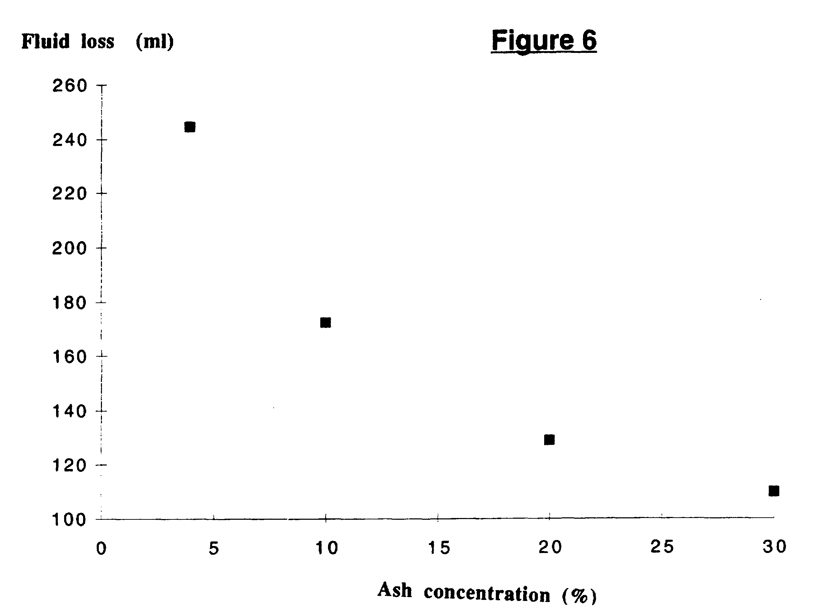

Figure 6 shows that fluid losses of about 100 ml could be obtained at 85°C for fly ash concentrations of about 25% to 30% (relative to the weight of cement) for the concentrations of retarding agent and dispersing agent used in these tests.

The remarkable performance obtained in this way merely by adding a mineral additive and before attempting any optimization of the properties of the slurry needs to be emphasized.

## Claims

1. A cementing composition for cementing oil, gas, water or geothermal wells, capable of forming a fluid slurry when mixed with water comprising
• an hydraulic cement
• 2 to 30 percent by weight, based upon the weight of cement, of a fluid loss control essentially consisting of 50-micron dry-screened solid particles.

2. A cementing composition according to claim 1 wherein the solid particles are 20-micron dry-screened.

3. A cementing composition according to claim 1 or claim 2, characterised in that at least 90% of the screened particles are less than 10 microns in size.

4. A cementing composition according to any of the preceding claim, characterised in that the screened solid particles come from fly ash.

5. A cementing composition according to any of the preceding claim, characterised in **that the** screened solid particles come from silica flour.

6. A cementing composition according to any of the preceding claim, characterised in that it comprises 10 to 20 percent by weight, based upon the weight of cement, the screened solid particles.

7. A cementing composition according to any of the preceding claim, characterised in that it further comprises a dispersing agent.

## Patentansprüche

1. Zementierungszusammensetzung zum Zementieren von Öl-, Gas-, Wasser- oder geothermischen Bohrungen, die in der Lage ist, eine Fluidaufschlämmung zu bilden, wenn sie mit Wasser gemischt wird, umfassend
• einen hydraulischen Zement
• 2 bis 30 Gewichtsprozent, bezogen auf das Zementgewicht, eines Fluidverlust-Kontrollmittels, das im wesentlichen aus Feststoffteilchen besteht, die bei 50 Mikrometer trockengesiebt sind.

2. Zementierungszusammensetzung nach Anspruch 1, worin die Feststoffteilchen bei 20 Mikrometer trockengesiebt sind.

3. Zementierungszusammensetzung nach Anspruch 1 oder 2,
dadurch gekennzeichnet,
daß mindestens 90 % der gesiebten Teilchen eine Größe von kleiner als 10 Mikrometer aufweisen.

4. Zementierungszusammensetzung nach einem der vorhergehenden Ansprüche,
dadurch gekennzeichnet,
daß die gesiebten Feststoffteilchen von Flugasche stammen.

5. Zementierungszusammensetzung nach einem der vorhergehenden Ansprüche,
dadurch gekennzeichnet,
daß die gesiebten Feststoffteilchen von Quarzmehl stammen.

6. Zementierungszusammensetzung nach einem der vorhergehenden Ansprüche,
dadurch gekennzeichnet,
daß sie 10 bis 20 Gew.-%, bezogen auf das Zementgewicht, der gesiebten Feststoffteilchen enthält.

7. Zementierungszusammensetzung nach einem der vorhergehenden Ansprüche,
dadurch gekennzeichnet,
daß sie weiterhin ein Dispergiermittel umfaßt.

## Revendications

1. Composition de cimentation pour la cimentation de puits pétroliers, à gaz, à eau, géothermiques et analogues capable de former un coulis fluide lorsque mélangée avec de l'eau comprenant :
- un ciment hydraulique
- 2 à 30 % en poids (par rapport au poids de ciment) d'un agent de contrôle du filtrat essentiellement constitué par des particules solides, tamisées à 50 microns.

2. Composition de cimentation selon la revendication 1, caractérisée en ce que les particules solides sont tamisées à 20 microns.

3. Composition de cimentation selon la revendication 1 ou 2, caractérisée en ce qu'au moins 90% des particules tamisées ont une dimension inférieure à 10 microns.

4. Composition de cimentation selon l'une des revendications précédentes, caractérisée en ce que les particules solides tamisées proviennent de cendres volantes.

5. Composition de cimentation selon l'une des revendications 1 à 3, caractérisée en ce que les particules solides tamisées proviennent de farine de silice.

6. Composition de cimentation selon la revendication 7, caractérisée en ce que l'agent de contrôle de filtrat constitué par des particules solides, tamisées à 50 microns, est ajouté à raison de 10 à 20 % en poids (par rapport au ciment).

7. Composition de cimentation selon l'une des revendications 6 à 8, caractérisée en ce qu'elle comporte en outre un agent dispersant.
